# EUROPEAN PATENT APPLICATION

(11) **EP 4 783 275 A1**
(43) Date of publication of application: **29.07.2026**
(21) Application number: 25203009.3
(22) Date of filing: 18.09.2025
(51) Int. Cl.: H01M 10/04, H01M 10/42

(54) **SECONDARY BATTERY INSPECTION APPARATUS, SECONDARY BATTERY INSPECTION METHOD, AND SECONDARY BATTERY MANUFACTURING METHOD**

(30) Priority: 14.10.2024 KR 20240139079
(71) Applicant: SAMSUNG SDI CO., LTD., Yongin-si, Gyeonggi-do 17084 (KR)
(72) Inventor: PARK, Su Hyun, 16678 Suwon-si, Gyeonggi-do (KR)
(74) Representative: Gulde & Partner

(57) **Abstract**

A secondary battery inspection apparatus includes a first support member configured to support an electrode tab bundle in which a plurality of electrode tabs extending outward from an electrode assembly are stacked from below, a displacement sensor configured to calculate a measurement value indicating a thickness of the electrode tab bundle by pressing the electrode tab bundle with a force from above, and a processor configured to determine whether the electrode tab bundle is normal based on the measurement value calculated by the displacement sensor.

## Description

### BACKGROUND

### 1. Field

Aspects of the present disclosure relate to a secondary battery inspection apparatus, a secondary battery inspection method, and a secondary battery manufacturing method.

### 2. Description of the Related Art

Secondary batteries are batteries that can be charged and discharged, unlike primary batteries that cannot be recharged. Low-capacity secondary batteries are used in portable small electronic devices such as smartphones, feature phones, laptop computers, digital cameras, and camcorders, while high-capacity secondary batteries are widely used as power sources for motor driving in hybrid vehicles, electric vehicles, and the like, batteries for power storage, or the like. These secondary batteries include electrodes including a positive electrode and/or a negative electrode, an electrode assembly including the electrodes, a case accommodating the electrode assembly, an electrode terminal connected to the electrode assembly, and the like.

As technology advances, the need for high-capacity batteries is ever increasing. Accordingly, a plurality of secondary batteries may be used by being electrically connected. For example, the secondary batteries can be applied to electronic devices in the form of a secondary battery module including a plurality of secondary batteries and/or a secondary battery pack including a plurality of secondary battery modules.

According to some examples, a plurality of secondary batteries may constitute the secondary battery pack. In such examples, the electronic devices may be electronic devices utilizing high output and/or high capacity and include, for example, electric vehicles and the like.

The secondary battery typically includes a stacked electrode assembly in which a positive electrode plate, a separator, and a negative electrode plate are alternately stacked. Electrode tabs (e.g., a positive electrode tab and a negative electrode tab) are respectively connected to a positive electrode plate which functions as a positive electrode and a negative electrode plate which functions as a negative electrode. In the stacked electrode assembly, because the positive and negative electrode plates are alternately stacked, the positive electrode tab and the negative electrode tab are also stacked to form electrode tab bundles (e.g., positive electrode tab bundle and negative electrode tab bundle). However, because the electrode tab is quite thin, the electrode tab may be folded during the stacking process.

The above-described information disclosed in the background technology of the present disclosure is only for improving understanding of the background of the present disclosure, and accordingly, can include information that does not constitute the related art.

### SUMMARY

The invention is defined by the appended claims. The description that follows is subjected to this limitation. Any disclosure lying outside the scope of said claims is only intended for illustrative as well as comparative purposes.

Aspects of the present invention are directed to providing a secondary battery inspection apparatus capable of identifying whether an electrode tab is folded in a stacked electrode assembly, a secondary battery inspection method, and a secondary battery manufacturing method.

The present invention is also directed to providing a secondary battery inspection apparatus capable of identifying whether an electrode tab is folded without damaging the electrode tabs with a simple structure, a secondary battery inspection method, and a secondary battery manufacturing method.

According to some embodiments of the present invention, there is provided a secondary battery inspection apparatus including: a first support member configured to support an electrode tab bundle in which a plurality of electrode tabs extending outward from an electrode assembly are stacked from below; a displacement sensor configured to calculate a measurement value indicating a thickness of the electrode tab bundle by pressing the electrode tab bundle with a force from above; and a processor configured to determine whether the electrode tab bundle is normal based on the measurement value calculated by the displacement sensor.

In some embodiments, the displacement sensor presses only one point on an upper surface of the electrode tab bundle.

In some embodiments, the force is 1.2 N to 1.6 N.

In some embodiments, the one point is positioned outside a cutting line of the plurality of electrode tabs.

In some embodiments, the first support member has a fixed position so as not to move up and down, and only the displacement sensor is configured to be vertically movable, or the first support member and the displacement sensor are each configured to be vertically movable.

In some embodiments, the secondary battery inspection apparatus further includes: a second support member at an interval from the first support member and configured to support the electrode assembly at a first height, wherein the first support member is movable between the first height and a second height lower than the first height, and wherein the displacement sensor is movable between the first height and a third height higher than the first height.

In some embodiments, the processor includes a control part configured to control operation of the first support member and the displacement sensor, and wherein, as the electrode assembly is supported by the second support member, the control part is configured to raise the first support member from the second height to the first height to support the electrode tab bundle and to lower the displacement sensor from the third height to press the electrode tab bundle supported by the first support member.

In some embodiments, the measurement value is a difference between a fourth height at which the electrode tab bundle is pressed with the force by lowering the displacement sensor from the third height and the first height.

In some embodiments, the control part is configured to raise the first support member from the second height to the first height and to lower the displacement sensor from the third height to the first height so that the measurement value becomes 0 before the electrode assembly is supported by the second support member.

In some embodiments, the processor is configured to determine whether the electrode tab bundle is normal based on a difference between the measurement value and a reference thickness.

In some embodiments, the processor is configured to determine that the electrode tab bundle is normal when the difference is smaller than the thickness of one electrode tab among the plurality of electrode tabs.

In some embodiments, the reference thickness is an average value of measurement values for a plurality of electrode tab bundles determined to be normal.

In some embodiments, the processor is configured to update the reference thickness by reflecting the measurement value when the electrode tab bundle is determined to be normal.

According to some embodiments of the present invention, there is provided a secondary battery inspection method including: a first support process of supporting an electrode tab bundle in which a plurality of electrode tabs extending outward from an electrode assembly are stacked from below at a first height using a first support member; a calculation process of calculating a measurement value corresponding to a thickness of the electrode tab bundle by pressing the electrode tab bundle supported in the first support process from above with a force using a displacement sensor; and a processing process of determining whether the electrode tab bundle is normal based on the measurement value calculated in the calculation process.

In some embodiments, in the calculation process, only one point on an upper surface of the electrode tab bundle is pressed with a force of 1.2 N to 1.6 N by the displacement sensor.

In some embodiments, the one point is positioned outside a cutting line of the plurality of electrode tabs.

In some embodiments, the secondary battery inspection method further includes: a second support process of supporting the electrode assembly at the first height using a second support member prior to the first support process, wherein in the first support process, the first support member is raised from a second height lower than the first height to support the electrode tab bundle, wherein in the calculation process, the displacement sensor is lowered from a third height higher than the first height to press the electrode tab bundle, and wherein the measurement value is a difference between a fourth height at which the electrode tab bundle is pressed with the force by lowering the displacement sensor from the third height and the first height.

In some embodiments, the secondary battery inspection method further includes: a reset process of resetting the displacement sensor by raising the first support member from the second height to the first height and lowering the displacement sensor from the third height to the first height so that the measurement value becomes 0, before the second support process.

In some embodiments, in the processing process, whether the electrode tab bundle is normal is determined based on a difference between the measurement value and a reference thickness.

According to some embodiments of the present invention, there is provided a secondary battery manufacturing method including: an inspection process of inspecting whether an electrode tab bundle in which a plurality of electrode tabs extending outward from an electrode assembly of a secondary battery are stacked is normal, wherein the inspection process includes: a first support process of supporting the electrode tab bundle from below at a first height using a first support member; a calculation process of calculating a measurement value corresponding to a thickness of the electrode tab bundle by pressing the electrode tab bundle supported in the first support process from above with a force using a displacement sensor; and a processing process of determining whether the electrode tab bundle is normal based on the measurement value calculated in the calculation process.

### BRIEF DESCRIPTION OF THE DRAWINGS

The following drawings attached to this specification illustrate preferred embodiments of the present invention and, together with the detailed description of the invention to be described below, serve to further understand the technical idea of the present invention, and therefore the present invention should not be construed as being limited to matters described in such drawings, in which:
FIG. 1 is a view schematically illustrating a cylindrical secondary battery that may be applied in some embodiments of the present invention;
FIG. 2 is a cross-sectional view schematically illustrating a prismatic secondary battery that may be applied in some embodiments of the present invention;
FIG. 3 is a view schematically illustrating an example of a pouch-shaped secondary battery that may be applied in some embodiments of the present invention;
FIG. 4 is a view schematically illustrating another example of the pouch-shaped secondary battery that may be applied in some embodiments of the present invention;
FIG. 5 is a view schematically illustrating an example of a configuration of a stacked electrode assembly, according to some embodiments of the present disclosure;
FIG. 6 is a view schematically illustrating a configuration of a secondary battery inspection apparatus according to some embodiments of the present invention;
FIG. 7A is a view illustrating a reset process of a displacement sensor in the secondary battery inspection apparatus of FIG. 6, according to some embodiments of the present invention;
FIG. 7B is a view illustrating a measurement preparation process in the secondary battery inspection apparatus of FIG. 6, according to some embodiments of the present invention;
FIG. 7C is a view illustrating a measurement process in the secondary battery inspection apparatus of FIG. 6, according to some embodiments of the present invention; and
FIG. 8 is a flowchart illustrating an example of a secondary battery inspection method according to some embodiments of the present invention.

### DETAILED DESCRIPTION

Hereinafter, some embodiments of the present disclosure will be described in detail with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Accordingly, because the embodiments disclosed in the present specification and configurations shown in the drawings are only some of the embodiments of the present disclosure and do not represent the entire technical spirit of the present disclosure, it should be understood that there are various suitable equivalents and modifications which may replace them at the time of filing the present application.

Further, when used in the present specification, "comprise or include" and/or "comprising or including" specify the presence of mentioned shapes, numbers, steps, operations, members, elements and/or groups thereof, and do not exclude the presence or addition of one or more other shapes, numbers, steps, operations, members, elements and/or groups thereof.

Further, to aid the understanding of the present disclosure, the accompanying drawings are not drawn to actual scale and the sizes of some components may be exaggerated. In addition, the same reference numerals may be given to the same components in different embodiments.

The mention that two objects to be compared are 'the same' means that that the two objects are 'substantially the same.' Accordingly, 'substantially the same' may include a deviation considered as a low level in the art, for example, a deviation within 5%. Further, uniformity of a parameter in a certain region may mean uniformity from an average point of view.

Although first, second, and the like are used to describe various components, it is to be understood that these components are not limited by these terms. These terms are only used to distinguish one component from another component, and unless otherwise stated, it is to be understood that the first component may be the second component.

Throughout the specification, unless otherwise stated, each component may be singular or plural.

The placement of an arbitrary component on the "upper portion (or lower portion)" of a component or "above (or below)" a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "on," "connected to," or "coupled to" another component, it should be understood that the components may be directly connected or coupled to each other, but another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The phrase such as "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers and/or sections, these elements, components, regions, layers and/or sections should not be limited by these terms. These terms are used only to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification is intended to describe the embodiments of the present disclosure, and is not intended to limit the present disclosure.

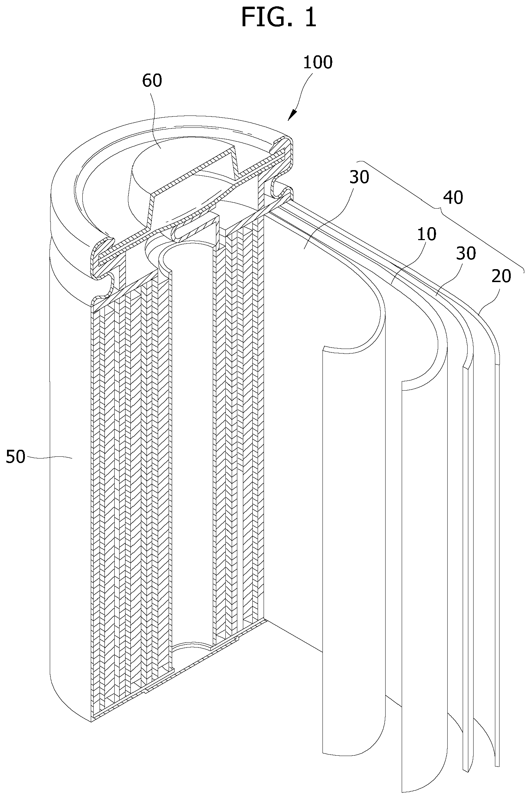

FIGS. 1 to 4 are cross-sectional views schematically illustrating secondary batteries that may be applied in some embodiments of the present invention.

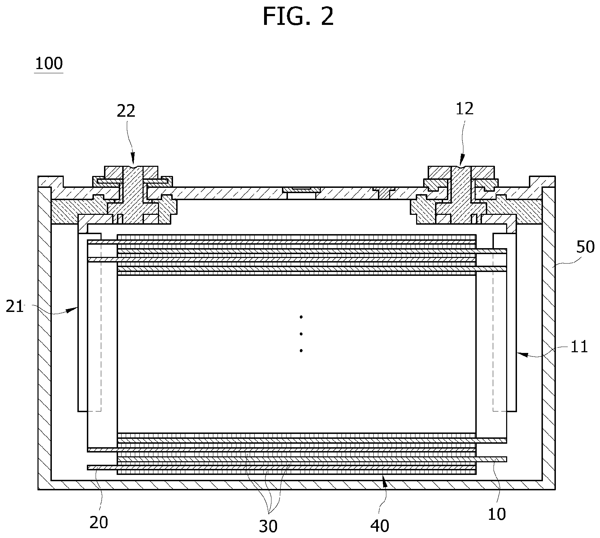

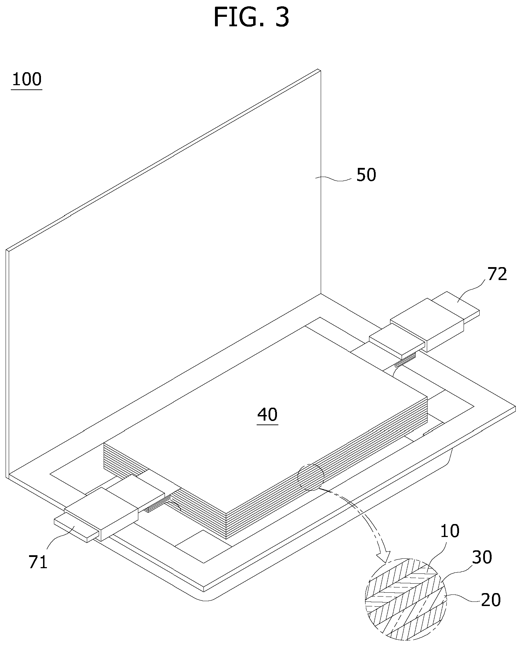

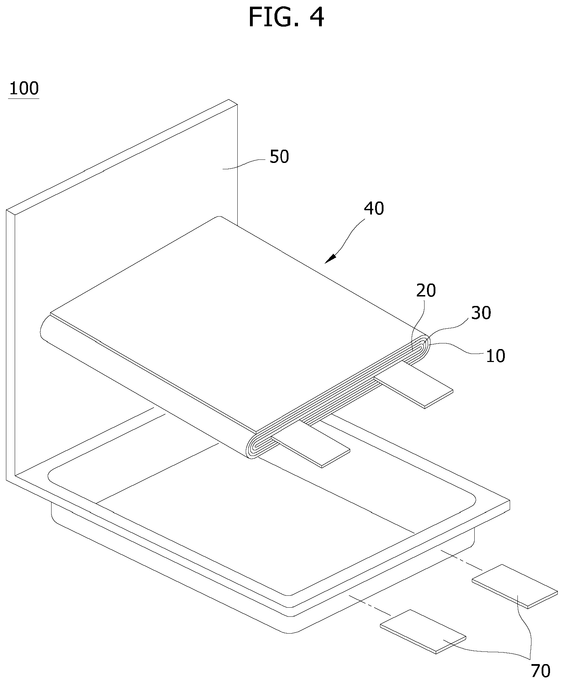

The secondary battery 100 may be classified as a cylindrical shape, a prismatic shape, a pouch shape, a coin shape, etc. depending on the shape. FIGS. 1 to 4 are schematic views showing the secondary batteries according to some embodiments, where FIG. 1 shows a cylindrical battery, FIG. 2 shows a prismatic battery, and FIGS. 3 and 4 show pouch-shaped batteries. Referring to FIGS. 1 to 4, the secondary battery 100 may include an electrode assembly 40 with a separator 30 interposed between a positive electrode 10 and a negative electrode 20, and a case 50 in which the electrode assembly 40 is built. The positive electrode 10, the negative electrode 20, and the separator 30 may be impregnated with an electrolyte. The secondary battery 100 may include a sealing member 60 for sealing the case 50 as shown in FIG. 1. In addition, in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which serve as an electrical passage to guide a current generated from the electrode assembly 40 to the outside.

As the positive electrode active material, a compound capable of reversible intercalation and deintercalation of lithium (e.g., a lithiated intercalation compound) may be used. For example, one or more of composite oxides of lithium and a metal selected from cobalt, manganese, nickel, and a combination thereof may be used.

The composite oxide may be a lithium transition metal composite oxide, and specific examples may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following formulas may be used as the composite oxide: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% or more and 99 mol% or less based on 100 mol% of metal excluding lithium in the lithium transition metal composite oxide. The high nickel-based positive electrode active material can realize high capacity and thus can be applied to high capacity, high density secondary batteries.

The positive electrode 10 for the secondary battery 100 may include a current collector and a positive electrode active material layer formed on the current collector. The positive electrode active material layer may include the positive electrode active material, and may further include a binder and/or a conductive material.

As an example, the positive electrode may further contain an additive that may serve as a sacrificial positive electrode.

The content of the positive electrode active material may range from 90 wt% to 99.5 wt% based on 100 wt% of the positive electrode active material layer, and the content of the binder and the conductive material may each range from 0.5 wt% to 5 wt% based on 100 wt% of the positive electrode active material layer.

The binder may serve to attach the positive electrode active material particles to each other well and to also attach the positive electrode active material to the current collector well. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and/or the like, but are not limited thereto.

The conductive material may be used to impart conductivity to the electrode, and in a configured battery, any electronically conductive material that does not cause a chemical change may be used. Examples of the conductive material may include carbon-based materials such as natural graphite, artificial graphite, carbon black, acetylene black, Ketjen black, carbon fibers, carbon nanofibers, carbon nanotubes, and/or the like; metal-based materials in the form of metal powder or metal fibers containing copper, nickel, aluminum, silver, and/or the like; conductive polymers such as a polyphenylene derivative; or a mixture thereof.

Al may be used as the current collector but it is not limited thereto.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon, hard carbon, mesophase pitch carbide, calcined coke, and/or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or a Sn-based negative electrode active material may be used as the material capable of doping and dedoping lithium. The Si-based negative electrode active material may include silicon, a silicon-carbon composite, SiOx (0<x<2), a Si-Q alloy (Q is selected from an alkali metal, an alkaline earth metal, a group 13 element, a group 14 element (excluding Si), a group 15 element, a group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to some embodiments, the silicon-carbon composite may be in the form of silicon particles whose surfaces are coated with amorphous carbon. For example, the silicon-carbon composite may include a secondary particle (e.g., a core) in which silicon primary particles are assembled, and an amorphous carbon coating layer (e.g., a shell) located on the surface of the secondary particle. The amorphous carbon may also be located between the silicon primary particles, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

The negative electrode 20 for the secondary battery 100 may include a current collector and a negative electrode active material layer located on the current collector. The negative electrode active material layer may include the negative electrode active material and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The binder may serve to attach the negative electrode active material particles well and to also attach the negative electrode active material to the current collector well. A non-aqueous binder, an aqueous binder, a dry binder, or a combination thereof may be used as the binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound may be further included to impart viscosity. This cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder is a polymer material which is capable of being fiberized and may be, for example, polytetrafluoroethylene, polyvinylidene fluoride, a polyvinylidene fluoride-hexafluoropropylene copolymer, polyethylene oxide, or a combination thereof.

The conductive material may be used to impart conductivity to the electrode, and in a configured battery, any electronically conductive material that does not cause a chemical change may be used. Specific examples may include carbon-based materials such as natural graphite, artificial graphite, carbon black, acetylene black, Ketjen black, carbon fibers, carbon nanofibers, carbon nanotubes, and/or the like; metal-based materials in the form of metal powder or metal fibers containing copper, nickel, aluminum, silver, and/or the like; conductive polymers such as a polyphenylene derivative; or a mixture thereof.

As the negative electrode current collector, one selected from copper foil, nickel foil, stainless steel foil, titanium foil, nickel foam, copper foam, a conductive metal-coated polymer substrate, and a combination thereof may be used.

The electrolyte for the secondary battery 100 may include a non-aqueous organic solvent and a lithium salt.

The non-aqueous organic solvent may serve as a medium through which ions involved in the electrochemical reaction of the battery may move.

The non-aqueous organic solvent may be a carbonate-based, an ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. As the alcohol-based solvent, ethyl alcohol, isopropyl alcohol, and the like may be used, and as the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane, and the like may be used.

The non-aqueous organic solvent may be used alone or in a combination of two or more.

In addition, when using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, thereby enabling the basic operation of the secondary battery and promoting the movement of lithium ions between the positive electrode and the negative electrode. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethanesulfonate, lithium tetrafluoroethanesulfonate, lithium difluorobis(oxalato)phosphate (LiDFOB), and lithium bis(oxalato)borate (LiBOB).

Depending on the type of secondary battery 100, the separator 30 may be present between the positive electrode 10 and the negative electrode 20. As the separator 30, polyethylene, polypropylene, polyvinylidene fluoride, or a multilayered film of two or more layers thereof may be used, and a mixed multilayered film such as a polyethylene/polypropylene two-layer separator, a polyethylene/polypropylene/polyethylene three-layer separator, or a polypropylene/polyethylene/polypropylene three-layer separator may also be used as the separator 30.

The separator 30 may include a porous substrate and a coating layer containing an organic material, an inorganic material, or a combination thereof located on one side or both sides of the porous substrate.

The porous substrate may be a polymer film formed of a polymer selected from polyolefins such as polyethylene and polypropylene, polyesters such as polyethylene terephthalate and polybutylene terephthalate, polyacetal, polyamide, polyimide, polycarbonate, polyether ketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, Teflon, and polytetrafluoroethylene or a copolymer or mixture of two or more thereof.

The organic material may include a polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

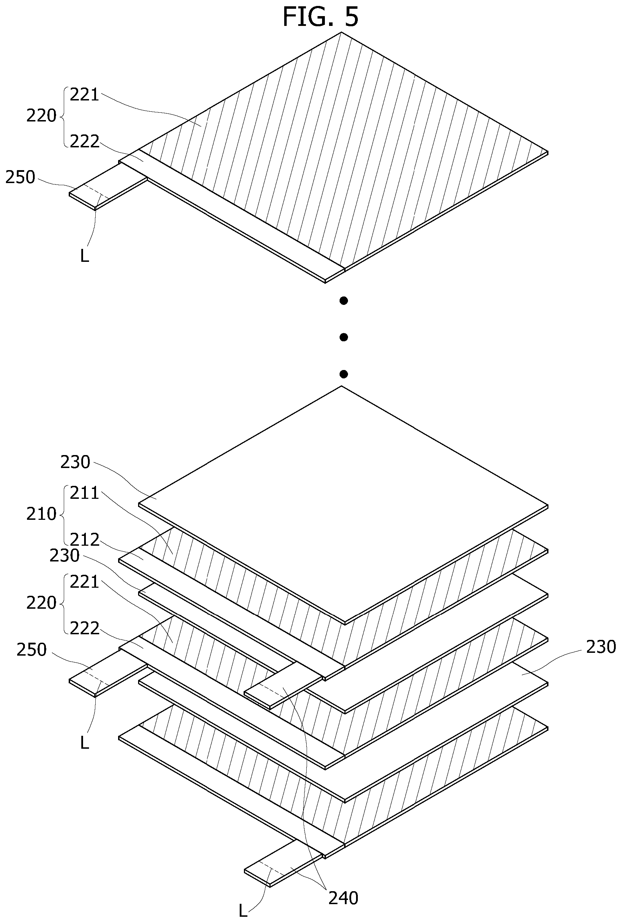

FIG. 5 is a view schematically illustrating an example of a configuration of a stacked electrode assembly, according to some embodiments of the present disclosure. The secondary battery may include, for example, the stacked electrode assembly having a structure illustrated in FIG. 5 as an electrode assembly. In some examples, the electrode assembly of the secondary battery may have a structure in which the stacked electrode assembly as shown in FIG. 5 is wound clockwise or counterclockwise around a winding axis.

Referring to FIG. 5, the stacked electrode assembly has a structure in which a first electrode 210, a separator 230, and a second electrode 220 are alternately stacked. That is, the stacked electrode assembly may have a structure in which the first electrode 210, the separator 230, the second electrode 220, the separator 230, the first electrode 210, the separator 230, and/or the like are sequentially stacked in this order from below.

The first electrode may function as either a positive electrode or negative electrode of the electrode assembly 200. The first electrode 210 may be formed to have the form of a foil including a metal material such as aluminum or an aluminum alloy. The type, size, shape or the like of the first electrode 210 is not particularly limited as long as it has conductivity and does not cause a chemical change in the secondary battery. A planar shape of the first electrode 210 may be rectangular, but designed to have various suitable shapes in addition to the rectangular shape.

A first active material layer 211 may be formed on at least a portion of the first electrode 210. The first active material layer 211 may be formed on both sides of the first electrode 210, or, in some examples, may be formed on only one side of the first electrode 210. When the first electrode 210 functions as the positive electrode, the first active material layer 211 includes a positive electrode active material. In addition, the first active material layer 211 further includes a positive electrode conductive material, a positive electrode binder, and/or the like in addition to the positive electrode active material.

The first electrode 210 may include a first uncoated portion 212 on which the first active material layer 211 is not formed. The first uncoated portion 212 may be located on one side of the first electrode 210. However, the form of the first uncoated portion 212 is not limited thereto, and the first uncoated portion 212 may be located over an entire edge region of the first electrode 210.

The second electrode 220 may function as either the negative electrode or the positive electrode of the electrode assembly, that is, an opposite electrode of the first electrode 210. The second electrode 220 may be formed to have the form of a foil including a metal material such as copper, a copper alloy, nickel, or a nickel alloy. The type, size, shape or the like of the second electrode 220 is not particularly limited as long as it has conductivity and does not cause a chemical change in the secondary battery. A planar shape of the second electrode 220 may be rectangular, but designed to have various suitable shapes in addition to the rectangular shape.

A second active material layer 221 may be formed on at least a portion of the second electrode 220. The second active material layer 221 may be applied on both sides of the second electrode 220, or, in some examples, may be applied on only one side of the second electrode 220. Because the second electrode 220 functions as the negative electrode, the second active material layer 221 may include a negative electrode active material. In addition, the second active material layer 221 further includes a negative electrode conductive material, a negative electrode binder, and/or the like in addition to the negative electrode active material.

The second electrode 220 may include a second uncoated portion 222 on which the second active material layer 221 is not formed. The second uncoated portion 222 may be located on one side of the second electrode 220. However, the form of the second uncoated portion 222 is not limited thereto, and the second uncoated portion 222 may be located over an entire edge region of the second electrode 220.

The separator 230 may be disposed between the first electrode 210 and the second electrode 220. The separator 230 may perform a function of preventing a short circuit between the first electrode 210 and the second electrode 220 while allowing lithium ions to move between the first electrode 210 and the second electrode 220.

The separator 230 may be disposed to entirely cover surface regions of the first electrode 210 and the second electrode 220. Accordingly, the separator 230 may prevent the first electrode 210 and the second electrode 220 from being directly exposed to the outside of the electrode assembly.

The first tab 240 is connected to the first electrode 210 and may protrude from the electrode assembly 200. That is, the first tab 240 may extend outward from the electrode assembly 200. When the first electrode 210 is functions as the positive electrode, the first tab 240 may function as a positive electrode tab of the secondary battery. There may be one or a plurality of first tabs 240 connected to one first electrode 210, and in the latter example, the plurality of first tabs 240 may be spaced apart from each other.

The first tab 240 may have the form of a foil extending from the first uncoated portion 212 of the first electrode 210. The first tab 240 may have a substantially rectangular shape. However, the shape of the first tab 240 is not limited thereto, and may be designed to have various suitable shapes.

The first tab 240 may be integrally formed with the first electrode 210. For example, the first tab 240 may be the remaining region of the first uncoated portion 212 which remains after a partial region of the first uncoated portion 212 is cut or removed by a notching process or the like. In some examples, the first tab 240 may be manufactured separately from the first electrode 210 and then connected to the first uncoated portion 212 by welding or the like. A material of the first tab 240 may be the same as a material of the first electrode 210.

Each of the plurality of stacked first electrodes 210 may include one or more first tabs 240 extending therefrom. That is, a plurality of first tabs 240 may be stacked corresponding to the plurality of stacked first electrodes 210. Neighboring first tabs 240 may be disposed to face each other in the vertical direction. The vertically neighboring first tabs 240 may be disposed parallel to each other. Accordingly, in the structure of the stacked electrode assembly, the plurality of vertically neighboring first tabs 240 may form an electrode tab bundle. In the electrode tab bundle, the neighboring first tabs 240 may come into contact with each other or may be spaced apart from each other at a set or predetermined interval, for example, the thickness of the second electrode 220 and the separator 230 or less.

In the stacked electrode assembly, the first tab 240 may be entirely disposed in the case of the secondary battery. On the other hand, the first tab 240 may be disposed in the case of the secondary battery after a part of the outer side is cut and removed. In such examples, the electrode tab bundle in which the plurality of first tabs 240 are stacked may be cut along a cutting line L to remove the outer part, and then disposed in the case of the secondary battery.

The second tab 250 may be connected to the second electrode 220 and may protrude from the electrode assembly 200. That is, the second tab 250 may extend outward from the electrode assembly 200. When the second electrode 220 is functions as the negative electrode, the second tab 250 may function as a negative electrode tab of the secondary battery. There may be one or a plurality of second tabs 250 connected to an individual second electrode 220, and in the latter example, the plurality of second tabs 250 may be spaced apart from each other.

As shown in FIG. 5, the second tab 250 may extend outward in the same direction as a direction in which the first tab 240 extends with respect to the electrode assembly. However, it is not limited thereto, and the second tab 250 may extend in a direction different from the direction in which the first tab 240 extends, for example, in an opposite direction.

The second tab 250 may have the form of a foil extending from the second uncoated portion 222 of the second electrode 220. The second tab 250 may have a substantially rectangular shape. However, the shape of the second tab 250 is not limited thereto, and may be designed to have various suitable shapes.

The second tab 250 may be integrally formed with the second electrode 220. For example, the second tab 250 may be the remaining region of the second uncoated portion 222 which remains after a partial region of the second uncoated portion 222 is cut or removed by a notching process or the like. In some examples, the second tab 250 may be manufactured separately from the second electrode 220 and then connected to the second uncoated portion 222 by welding or the like. A material of the second tab 250 may be the same or substantially the same as a material of the second electrode 220.

Each of the plurality of stacked second electrodes 220 may include one or more second tabs 250 extending therefrom. That is, a plurality of second tabs 250 may be stacked corresponding to the plurality of stacked second electrodes 220. Neighboring second tabs 250 may be disposed to face each other in the vertical direction. The vertically neighboring second tabs 250 may be disposed parallel to each other. Accordingly, in the structure of the stacked electrode assembly, the plurality of vertically neighboring second tabs 250 may form an electrode tab bundle. In the electrode tab bundle, the neighboring second tabs 250 may come into contact with each other or may be spaced apart from each other at a set or predetermined interval, for example, the thickness of the first electrode 210 and the separator 230 or less.

In the stacked electrode assembly, the second tab 250 may be entirely disposed in the case of the secondary battery. On the other hand, the second tab 250 may be disposed in the case of the secondary battery after a part of the outer side is cut and removed. In such examples, the electrode tab bundle in which the plurality of second tabs 250 are stacked may be cut along a cutting line L to remove the outer part, and then disposed in the case of the secondary battery.

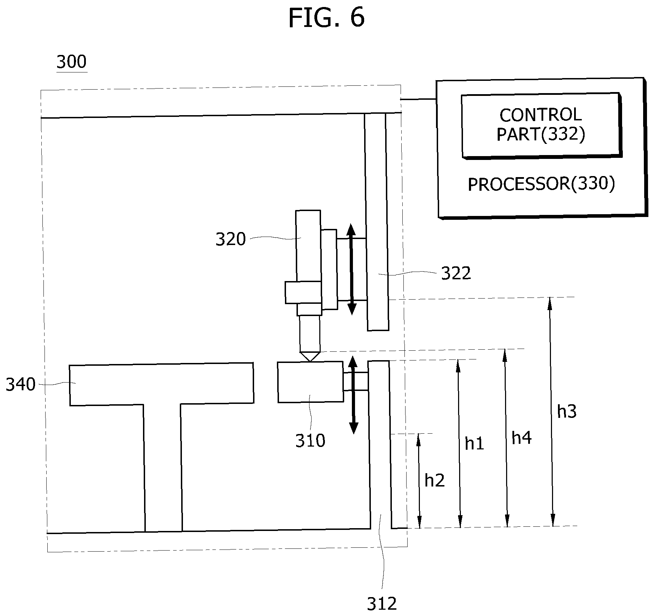

FIG. 6 is a view schematically illustrating a configuration of a secondary battery inspection apparatus according to some embodiments of the present invention. Referring to FIG. 6, a secondary battery inspection apparatus 300 includes a first support member 310, a displacement sensor 320, a processor 330, and a second support member 340.

The secondary battery inspection apparatus 300 of FIG. 6 is an apparatus for inspecting whether there is a defect in the electrode tab bundle of the secondary battery 100 to be inspected (a target secondary battery). In particular, the secondary battery inspection apparatus 300 may be used to inspect whether a defect has occurred due to bending of an electrode tab or the like in the process of alternately stacking a positive electrode, a negative electrode, and a separator to manufacture a stacked electrode assembly.

Accordingly, the secondary battery inspection apparatus 300 may detect whether the electrode tabs constituting the electrode tab bundles are folded in the stacked electrode assembly to determine whether the electrode tab bundles are defective.

The secondary battery inspection apparatus 300 may detect whether the electrode tab is folded by measuring the thickness of the electrode tab bundle. That is, the secondary battery inspection apparatus 300 may detect whether the electrode tab is folded based on a difference in thickness between an electrode tab bundle without a folded electrode tab (hereinafter, referred to as a "normal electrode tab bundle") and an electrode tab bundle including one or more folded electrode tabs (hereinafter, referred to as a "defective electrode tab bundle").

The defective electrode tab bundle may have a thickness difference corresponding to the thickness of the folded electrode tab as compared to the normal electrode tab bundle. For example, when measuring the thickness of the defective electrode tab bundle, when the thickness is measured at a position where the electrode tabs overlap due to the folded electrode tab, the thickness of the defective electrode tab bundle may be greater than that of the normal electrode tab bundle. On the other hand, when measuring the thickness of the defective electrode tab bundle, when the thickness is measured at a position where electrode tabs are empty due to the folded electrode tab, the thickness of the defective electrode tab bundle may be smaller than that of the normal electrode tab bundle.

In some embodiments, to more accurately measure the difference in thickness, the secondary battery inspection apparatus 300 may measure a thickness while directly contacting the electrode tab bundle and pressing the electrode tab bundle with a set or predetermined force. Accordingly, because an empty space (e.g., gap) between the stacked electrode tabs disappears and the electrode tabs come into contact with each other, the thickness of only the electrode tab bundle can be accurately measured.

According to some embodiments, the secondary battery inspection apparatus 300 may measure a thickness of the corresponding point while pressing only a specific point of the electrode tab bundle. In such examples, the point pressed by the secondary battery inspection apparatus 300 may correspond to an overlapping portion of the folded electrode tab or an empty portion. In the former example, the thickness of the electrode tab bundle measured by the secondary battery inspection apparatus 300 may be greater than the thickness of the normal electrode tab bundle. On the other hand, in the latter example, the thickness of the electrode tab bundle measured by the secondary battery inspection apparatus 300 may be smaller than the thickness of the normal electrode tab bundle.

For example, the secondary battery inspection apparatus 300 may measure a thickness while pressing one point of a portion outside the cutting line L in the electrode tab bundle. The portion outside the cutting line L is a portion that is removed before the finished electrode assembly is put into the case of the secondary battery in a subsequent process. Therefore, when the thickness of the electrode tab bundle is measured by pressing a specific point outside the cutting line L, the electrode assembly of the secondary battery may not include the corresponding portion even when damage occurs at the pressed point in the process. In particular, when the secondary battery inspection apparatus 300 presses only a specific point of the electrode tab bundle to measure the thickness, damage is likely to occur, and when the pressing point is an outer part of the cutting line L, the electrode tab bundle of the electrode assembly included in the completed secondary battery may not include a damaged part.

The first support member 310 is a member for supporting an electrode tab bundle, which is a measurement target, from below. The shape or structure of the first support member 310 is not particularly limited as long as the electrode assembly can be supported from below. For example, the upper surface of the first support member 310 may include a flat surface having a size equal to or larger than that of the lower surface of the electrode tab bundle. The shape of the upper surface of the first support member 310 is not limited, and may be a polygonal shape such as a quadrangle, a circular shape, or an elliptical shape in some examples.

There is no particular limitation on the method of installing the first support member 310. For example, the first support member 310 may be installed by being connected to a set or predetermined support fixedly installed on the ground or the bottom surface of the secondary battery inspection apparatus 300.

The first support member 310 may be installed at a first height h1 from a set or predetermined reference position. Here, the set or predetermined reference position may be the ground or the bottom surface of the secondary battery inspection apparatus 300, but is not limited thereto. For example, the first height h1 may be substantially the same as the height of the second support member 340 supporting the electrode assembly including the electrode tab bundle to be inspected. Accordingly, because the electrode assembly and the electrode tab bundle to be inspected are supported at substantially the same height, the thickness may be measured while the lower surface of the electrode tab bundle to be inspected is flat.

The first support member 310 may be fixed at the first height h1 without moving up and down. Accordingly, even when the upper surface of the electrode tab bundle is pressed downward by the displacement sensor 320, the electrode tab bundle may be supported more stably without being bent downward.

In some examples, the first support member 310 may be installed to be movable up and down. For example, the first support member 310 may be installed on a vertical bar 312 to be movable up and down using a linear motor or the like, but is not limited thereto. However, when the thickness is measured, that is, the first support member 310 is pressed by the displacement sensor 320, the first support member 310 is positioned at the first height h1. Accordingly, as the displacement sensor 320 descends, a set or predetermined force may be applied to the electrode tab bundle.

In such examples, the first support member 310 may be installed so as to be movable between the first height h1 and a second height h2 lower than the first height h1. Accordingly, in the example in which the second support member 340 is a part of a device (e.g., a conveyor device) for transporting an electrode assembly including an electrode tab bundle in one direction, when the first support member 310 is lowered to the second height h2, the electrode tab bundle may be prevented from colliding with the first support member 310 and being damaged during the transport process. The second height h2 is not particularly limited.

According to some embodiments, the first support member 310 may be paired with the displacement sensor 320 and installed to be movable up and down. For example, when measuring the thickness while pressing the electrode tab bundle using the displacement sensor 320, the first support member 310 is raised from the second height h2 to the first height h1 in response to the lowering of the displacement sensor 320, but after the measurement is completed, the first support member 310 may be lowered from the first height h1 to the second height h2 in response to the raising of the displacement sensor 320. However, it is not limited thereto, and the first support member 310 may be able to move up and down independently under the control of the processor 330.

The displacement sensor 320 presses the electrode tab bundle from above with a set or predetermined force to calculate a measurement value indicating the thickness of the electrode tab bundle. For example, the displacement sensor 320 may calculate the measurement value by pressing a point on the upper surface of the electrode tab bundle supported by the first support member 310 at the first height h1 at a fourth height h4. Here, the fourth height h4 may be substantially the same as the sum of the first height h1 and the thickness of the electrode tab bundle pressed with a set or predetermined force.

According to some embodiments, the displacement sensor 320 may press the electrode tab bundle with a force sufficient to measure the thickness of the electrode tab bundle. Here, the force sufficient to measure the thickness of the electrode tab bundle should be a magnitude at which no empty space (e.g., gap) is generated between the electrode tabs included in the electrode tab bundle at least at the pressed point. However, in some examples, the applied force has a magnitude that does not cause damage at or around the contact point of the electrode tab bundle. The magnitude of the force applied by the displacement sensor 320 may vary depending on the number of stacked electrode tabs constituting the electrode tab bundle, and may be, for example, 1.2 N to 1.6 N.

According to some embodiments, the displacement sensor 320 may be one of the contact type displacement sensors. In addition, in some examples, the displacement sensor 320 has a measurement error range that is as small as possible. For example, the displacement sensor 320 may have an error range smaller than a thickness (e.g., a threshold value to be described below) of one electrode tab constituting the electrode tab bundle. Accordingly, the displacement sensor 320 may accurately measure the thickness of the electrode tab bundle so that the thickness difference of the electrode tab bundle due to the bending of a single electrode tab may be identified.

There is no particular limitation on the type of displacement sensor 320. For example, the displacement sensor 320 may be a device that measures the thickness of an object to be measured based on a set or predetermined physical quantity according to the position of a measuring member installed at one end (e.g., a lower end). An example of the measuring member may be a spindle, but is not limited thereto. For example, the displacement sensor 320 may be a device that measures the thickness of the object to be measured based on a difference between the position of the measuring member (e.g., the fourth height h4) and a preset reference position (e.g., the first height h1).

To this end, the displacement sensor 320 may be installed to be movable up and down. For example, the displacement sensor 320 may be installed on a vertical bar 322 to be movable up and down using a linear motor or the like, but is not limited thereto. In such examples, the displacement sensor 320 may be installed so as to be movable between the first height h1 and a third height h3, which is higher than the fourth height h4. The third height h3 is not particularly limited, and may be, for example, a height at which a difference between the third height h3 and the first height h1 is greater than the thickness of the electrode tab bundle to be measured.

The processor 330 may determine whether the electrode tab bundle is normal using the measurement value calculated by the displacement sensor 320. For example, the processor 330 may compare the measurement value of the displacement sensor 320 with a preset reference thickness and determine whether the electrode tab bundle is normal based on the difference between the measurement value and the reference thickness. For example, the processor 330 may determine that the electrode tab bundle is normal when the difference is less than a set or predetermined threshold, but may determine that the electrode tab bundle is defective when the difference is greater than the set or predetermined threshold.

Here, the threshold may be appropriately set in consideration of a difference between a thickness of a normal electrode tab bundle and a typical thickness of a defective electrode tab bundle. For example, the threshold may be substantially the same as the thickness of one electrode tab. Accordingly, even when there is a folding phenomenon in one electrode tab among the electrode tab bundle, it is possible to determine that the corresponding electrode tab bundle is defective.

According to some embodiments, there is no particular limitation on the method of setting the reference thickness. In some examples, the reference thickness may be a value based on the thickness of the electrode tab bundle determined to be normal. For example, the reference thickness may be an average value of thicknesses of a plurality of normal electrode tab bundles.

In addition, the reference thickness does not have to be a fixed value, and may also be updated. For example, when it is determined that the electrode tab bundle to be inspected is normal, the processor 330 may update the reference thickness by reflecting the thickness of the corresponding electrode tab bundle. For example, when the reference thickness is an average value of the thicknesses of a plurality of normal electrode tab bundles, the measurement value of the electrode tab bundle determined to be normal immediately before may be included in obtaining the average value.

The reference thickness referenced by the processor 330 may be stored in a storage medium. To this end, the secondary battery inspection apparatus 300 may further include a storage device such as a memory for storing information on the reference thickness. In addition, the processor 330 may access the storage device to reference the reference thickness or update a pre-stored value of the reference thickness.

According to some embodiments, the processor 330 may be a computing device capable of reading a computer program and performing processing according to a set or predetermined algorithm. Here, the computer program may be recorded in a computer-readable storage medium or may be accessed through a set or predetermined network. In addition, there is no particular limitation on the type of computing device.

According to some embodiments, the processor 330 may include a control part 332 that controls the operation of the first support member 310 and/or the displacement sensor 320. The control part 332 may control the operation of the first support member 310 and/or the displacement sensor 320 according to a set or predetermined algorithm to measure the thickness of the electrode tab bundle supported by the first support member 310. The specific process by which the control part 332 controls the operation of the first support member 310 and/or the displacement sensor 320 will be described below.

The second support member 340 is a member for supporting the electrode assembly connected to the electrode tab bundle from below. The shape or structure of the second support member 340 is not particularly limited as long as the electrode assembly can be supported from below. For example, the upper surface of the second support member 340 may include a flat surface having a size equal to or larger than that of the lower surface of the electrode tab bundle. The shape of the upper surface of the second support member 340 is not limited, and may be a polygonal shape such as a quadrangle, a circular shape, or an elliptical shape.

There is no particular limitation on the method of installing the second support member 340. For example, the second support member 340 may be installed by being connected to a set or predetermined support fixedly installed on the ground or the bottom surface of the secondary battery inspection apparatus 300. The second support member 340 may be installed at the first height h1 from the set or predetermined reference position.

The second support member 340 may be a portion of a transport device for transporting the electrode assembly. For example, the second support member 340 may be a device having a conveyor structure. In such examples, the electrode assembly in which the electrode tab bundle extends may be temporarily stopped for inspection when the electrode assembly reaches the secondary battery inspection apparatus 300 while moving along the conveyor.

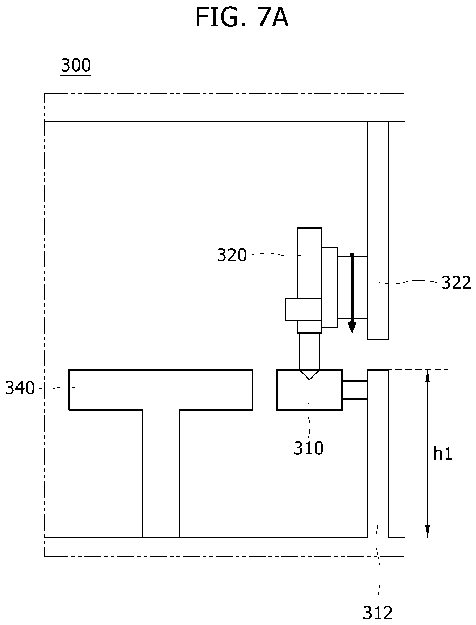

Next, a process of measuring the thickness of the electrode tab bundle by using the secondary battery inspection apparatus of FIG. 6 will be described. As described above, the process of measuring the thickness of the electrode tab bundle, which will be described below, may be performed by the control part 332 controlling the operations of the first support member 310 and the displacement sensor 320. FIGS. 7A to 7C are views sequentially showing the process of measuring the thickness of the electrode tab bundle in the secondary battery inspection apparatus.

Hereinafter, it will be assumed that the first support member 310 is installed to be movable up and down, and the control operation by the control part 332 will be described. However, it is obvious to those skilled in the art that the control operation described below may be applied in the same way even when the first support member 310 is fixed at the first height h1, except for the up-and-down movement of the first support member 310.

Referring to FIG. 7A, a reset process of the displacement sensor 320 is performed. The reset process of the displacement sensor 320 includes setting a measurement value of the displacement sensor 320 to '0'. The reset process is an optional process, and the reset process may be unnecessary according to the type and/or usage of the displacement sensor 320.

The reset process may be performed when the electrode tab bundle is not supported by the first support member 310. Additionally, before the reset process starts, the first support member 310 may be positioned at a position lower than the first height h1, such as the second height h2. Additionally, the displacement sensor 320 may be positioned at a position higher than the first height h1, such as the third height h3.

When the reset process starts, the control part 332 controls the first support member 310 so that the first support member 310 rises from the second height h2 to the first height h1. Then, the control part 332 controls the displacement sensor 320 so that the displacement sensor 320 descends from the third height h3 to the first height h1. As a result, the first support member 310 and the displacement sensor 320 come into contact with each other at the first height h1, and in such examples, the measurement value of the displacement sensor 320 is set to '0'. Depending on the type of displacement sensor 320, the displacement sensor 320 may operate in such a way that the measuring member rises to the inside of the displacement sensor 320 when the measuring member attached to an end portion comes into contact with the first support member 310.

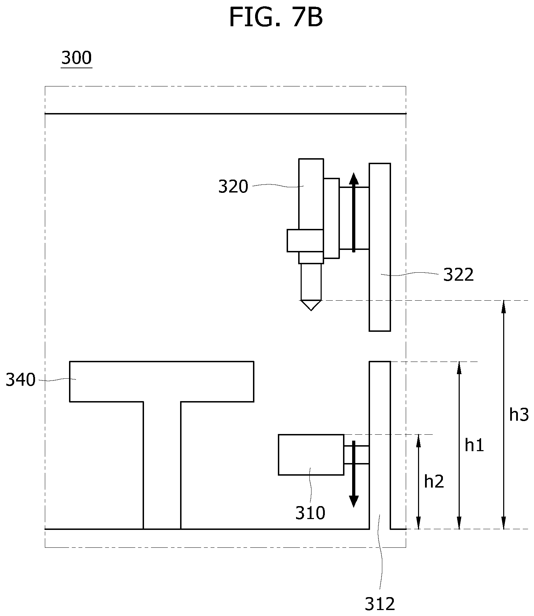

Referring to FIG. 7B, when the reset process is completed, the control part 332 controls the first support member 310 so that the first support member 310 descends from the first height h1 to the second height h2. Then, the control part 332 controls the displacement sensor 320 so that the displacement sensor 320 rises from the first height h1 to the third height h3. As a result, the first support member 310 and the displacement sensor 320 return to the state before starting the reset process. Depending on the type of displacement sensor 320, the displacement sensor 320 may operate in such a way that the measuring member attached to the end portion protrudes as much as possible toward the lower side of the displacement sensor 320.

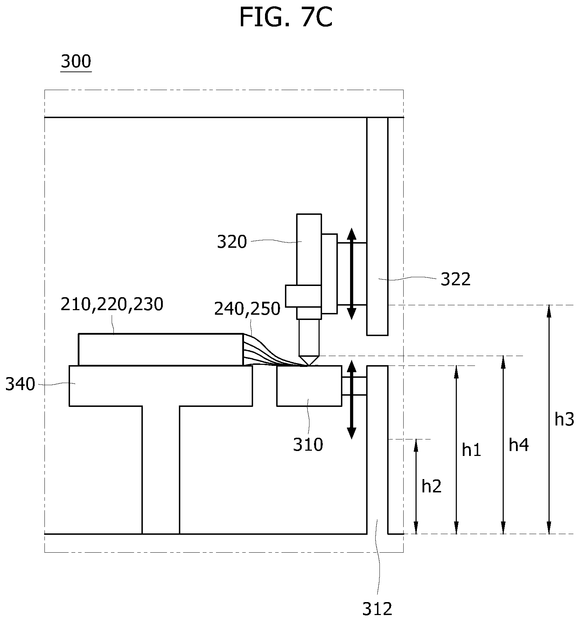

Referring to FIG. 7C, a process of measuring the thickness of the electrode tab bundle is performed. The thickness measuring process may be performed when the electrode tab bundle extending from the electrode assembly is positioned at the first height h1 in an upward direction of the first support member 310 as the electrode assembly is mounted on the second support member 340.

When the measuring process starts, the control part 332 controls the first support member 310 so that the first support member 310 rises again from the second height h2 to the first height h1. Then, the control part 332 controls the displacement sensor 320 to descend until the displacement sensor 320 comes into contact with the electrode tab bundle at the third height h3. For example, the control part 332 may control the displacement sensor 320 to descend to the fourth height h4, which is a set or predetermined height when the force applied to the displacement sensor 320 by contact with the electrode tab bundle becomes a force of a set or predetermined magnitude (e.g., 1.2 N to 1.6 N).

As a result, the first support member 310 supports the electrode tab bundle from below at the first height h1, and the displacement sensor 320 presses the electrode tab bundle with a set or predetermined force at the fourth height h4. In addition, the measurement value of the displacement sensor 320 is the difference between the fourth height h4 and the first height h1. In such examples, depending on the type of displacement sensor 320, the displacement sensor 320 may operate in such a way that a portion corresponding to the measuring member rises to the inside of the displacement sensor 320 when the measuring member attached to the end portion comes into contact with the electrode tab bundle.

Next, a secondary battery inspection method according to some embodiments of the present invention will be described.

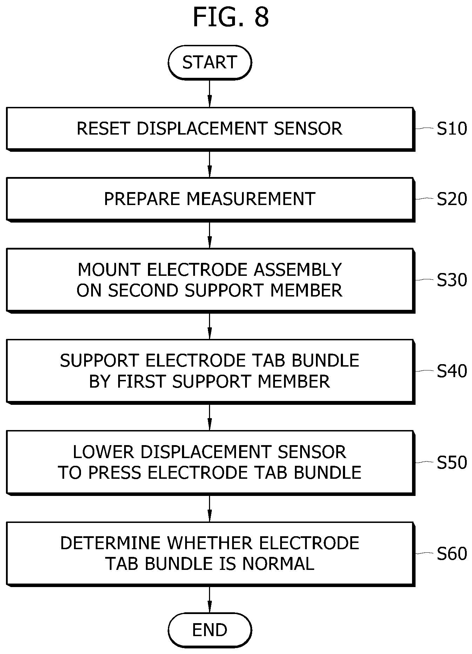

FIG. 8 is a flowchart illustrating an example of a secondary battery inspection method according to some embodiments of the present invention. Hereinafter, the process of performing the secondary battery inspection method of FIG. 8 by using the secondary battery inspection apparatus 300 shown in FIG. 6 will be described. Therefore, in relation to the secondary battery inspection method, the matters not described in detail below may be the same or substantially the same as those described with reference to FIGS. 6 and 7A to 7C. However, the following description does not limit the secondary battery inspection method according to the some embodiments to being performed by only the secondary battery inspection apparatus 300 shown in FIG. 6.

According to some embodiments, the secondary battery inspection method shown in FIG. 8 may be performed after an electrode assembly in which an electrode tab bundle is extended is manufactured and before the manufactured electrode assembly is put into a case. For example, the secondary battery inspection method shown in FIG. 8 may be performed before cutting an end portion of the electrode tab bundle along the cutting line L after the electrode assembly is manufactured.

Referring to FIGS. 6 and 8, first, the reset process of the displacement sensor 320 is performed (S10). The reset process S10 may be performed when the electrode tab bundle is not supported by the first support member 310. Additionally, before the reset process S10 starts, the first support member 310 may be positioned at the second height h2 and the displacement sensor 320 may be positioned at the third height h3.

When the reset process S10 starts, the first support member 310 rises from the second height h2 to the first height h1. Then, the displacement sensor 320 descends from the third height h3 to the first height h1. The raising of the first support member 310 and the lowering of the displacement sensor 320 may be performed concurrently (e.g., simultaneously), or may be performed sequentially with a set or predetermined time interval. In the latter example, the process of raising the first support member 310 to the first height h1 may be completed before the process of lowering the displacement sensor 320 to the first height h1. As a result of the reset process, the first support member 310 and the displacement sensor 320 come into contact with each other at the first height h1, and at this time, the measurement value of the displacement sensor 320 is set to '0'.

When the reset process S10 is completed, a measurement preparation process is performed (S20). In the measurement preparation process S20, the first support member 310 descends from the first height h1 to the second height h2, and the displacement sensor 320 rises from the first height h1 to the third height h3.

When the measurement preparation process (S20) is completed, the electrode assembly is mounted on the second support member 340 so as to be supported by the second support member 340 (S30, second support operation). As a result of the second support operation, the electrode tab bundle may be positioned at the first height h1 in the upward direction of the first support member 310.

Next, the first support member 310 is raised again from the second height h2 to the first height h1 so that the first support member 310 supports the electrode tab bundle from below (S40, first support process). Then, the displacement sensor 320 is lowered from the third height h3 to the fourth height h4 pressing the electrode tab bundle so that a processor 330 calculates a measurement value corresponding to the thickness of the electrode tab bundle (S50, calculation process). The lowering of the displacement sensor in the calculation process S50 may be performed concurrently (e.g., simultaneously) with the raising of the first support member in the first support process S40 or sequentially with a set or predetermined time interval. In the latter example, the raising of the first support member 310 to the first height h1 may be completed before the lowering of the displacement sensor 320 to the fourth height h4.

As a result, the first support member 310 supports the electrode tab bundle from below at the first height h1, and the displacement sensor 320 presses the electrode tab bundle with a set or predetermined force at the fourth height h4. In addition, the measurement value of the displacement sensor 320 is the difference between the fourth height h4 and the first height h1.

Next, the processor 330 determines whether the electrode tab bundle is normal based on the measurement value calculated in the calculation process S50 (S60, processing process). For example, in the processing process S60, the measurement value of the displacement sensor 320 may be compared with a preset reference thickness and whether the electrode tab bundle is normal may be determined based on the difference between the measurement value and the reference thickness For example, in the processing process S60, it may be determined that the electrode tab bundle is normal when the difference is less than a set or predetermined threshold, but it may be determined that the electrode tab bundle is defective when the difference is greater than the set or predetermined threshold.

According to some embodiments of the present invention, the internal state of a secondary battery such as the degree of electrolyte impregnation or the presence of foreign substances can be determined without destroying the secondary battery in which an activation process is in progress or is completed.

According to some embodiments of the present invention, the quality or shape of an SEI film can be determined in real time even during the activation process.

However, technical effects acquirable through the present disclosure are not limited to the above-described technical effects, and other technical effects which are not mentioned will be clearly understood by those skilled in the art from the description of the invention described below.

Although the present disclosure has been described with reference to the embodiments shown in the drawings, these embodiments are merely exemplary, and it should be understood by those skill in the art that various suitable modifications and equivalents are possible.

## Claims

1. A secondary battery inspection apparatus (300) comprising:
a first support member (310) configured to support an electrode tab bundle in which a plurality of electrode tabs (240, 250) extending outward from an electrode assembly (200) are stacked from below;
a displacement sensor (320) configured to calculate a measurement value indicating a thickness of the electrode tab bundle by pressing the electrode tab bundle with a force from above; and
a processor (330) configured to determine whether the electrode tab bundle is normal based on the measurement value calculated by the displacement sensor (320).

2. The secondary battery inspection apparatus (300) of claim 1, wherein the displacement sensor (320) presses only one point on an upper surface of the electrode tab bundle.

3. The secondary battery inspection apparatus (300) of claim 2, wherein the force is 1.2 N to 1.6 N.

4. The secondary battery inspection apparatus (300) of claim 2, wherein the one point is positioned outside a cutting line of the plurality of electrode tabs (240, 250).

5. The secondary battery inspection apparatus (300) of any one of the preceding claims, wherein the first support member (310) has a fixed position so as not to move up and down, and only the displacement sensor (320) is configured to be vertically movable, or the first support member (310) and the displacement sensor (320) are each configured to be vertically movable.

6. The secondary battery inspection apparatus (300) of claim 5, further comprising:
a second support member (340) at an interval from the first support member (310) and configured to support the electrode assembly (200) at a first height (h1),
wherein the first support member (310) is movable between the first height (h1) and a second height lower (h2) than the first height (h1), and
wherein the displacement sensor (320) is movable between the first height (h1) and a third height (h3) higher than the first height (h1).

7. The secondary battery inspection apparatus (300) of claim 6, wherein the processor (330) comprises a control part (332) configured to control operation of the first support member (310) and the displacement sensor (320), and
wherein, as the electrode assembly (200) is supported by the second support member (340), the control part (332) is configured to raise the first support member (310) from the second height (h2) to the first height (h1) to support the electrode tab bundle and to lower the displacement sensor (320) from the third height (h3) to press the electrode tab bundle supported by the first support member (310).

8. The secondary battery inspection apparatus (300) of claim 7, wherein the measurement value is a difference between a fourth height (h4) at which the electrode tab bundle is pressed with the force by lowering the displacement sensor (320) from the third height (h3) and the first height (h1).

9. The secondary battery inspection apparatus (300) of claim 8, wherein the control part (332) is configured to raise the first support member (310) from the second height (h2) to the first height (h1) and to lower the displacement sensor (320) from the third height (h3) to the first height (h1) so that the measurement value becomes 0 before the electrode assembly (200) is supported by the second support member (340).

10. The secondary battery inspection apparatus (300) of claim 8, wherein the processor (330) is configured to determine whether the electrode tab bundle is normal based on a difference between the measurement value and a reference thickness.

11. The secondary battery inspection apparatus (300) of claim 10, wherein the processor (330) is configured to determine that the electrode tab bundle is normal when the difference is smaller than the thickness of one electrode tab among the plurality of electrode tabs.

12. The secondary battery inspection apparatus (300) of claim 11, wherein the reference thickness is an average value of measurement values for a plurality of electrode tab bundles determined to be normal.

13. The secondary battery inspection apparatus (300) of claim 11, wherein the processor (330) is configured to update the reference thickness by reflecting the measurement value when the electrode tab bundle is determined to be normal.

14. A secondary battery inspection method comprising:
a first support process of supporting an electrode tab bundle in which a plurality of electrode tabs extending outward from an electrode assembly (200) are stacked from below at a first height (h1) using a first support member (310);
a calculation process of calculating a measurement value corresponding to a thickness of the electrode tab bundle by pressing the electrode tab bundle supported in the first support process from above with a force using a displacement sensor (320); and
a processing process of determining whether the electrode tab bundle is normal based on the measurement value calculated in the calculation process.

15. A secondary battery manufacturing method comprising:
an inspection process of inspecting whether an electrode tab bundle in which a plurality of electrode tabs extending outward from an electrode assembly (200) of a secondary battery (100) are stacked is normal,
wherein the inspection process comprises:
a first support process of supporting the electrode tab bundle from below at a first height (h1) using a first support member (310);
a calculation process of calculating a measurement value corresponding to a thickness of the electrode tab bundle by pressing the electrode tab bundle supported in the first support process from above with a force using a displacement sensor (320); and
a processing process of determining whether the electrode tab bundle is normal based on the measurement value calculated in the calculation process.
